# EUROPEAN PATENT APPLICATION

(11) **EP 4 672 137 A1**
(43) Date of publication of application: **31.12.2025**
(21) Application number: 25183395.0
(22) Date of filing: 17.06.2025
(51) Int. Cl.: G06T 5/60, G06T 5/73, G06T 3/4046, G06T 3/4053

(54) **IMAGE PROCESSING METHOD, IMAGE PROCESSING APPARATUS, IMAGE PROCESSING SYSTEM, TRAINING METHOD AND PROGRAM**

(30) Priority: 27.06.2024 JP 2024103697
(71) Applicant: CANON KABUSHIKI KAISHA, Tokyo 146-8501 (JP)
(72) Inventor: KUSUMI, Yuichi, 146-8501 Tokyo (JP); KIMURA, Yoshinori, 146-8501 Tokyo (JP)
(74) Representative: Canon Europe Limited

(57) **Abstract**

A method and the like for performing image processing with higher precision on various image data using a machine learning model are provided. The method includes obtaining an input image and range information about pixel values of the input image, selecting at least one machine learning model from among a plurality of machine learning models based on the range information, and generating an estimated image by inputting the input image to the selected machine learning model. Alternatively, the method includes obtaining an input image and range information about the input image, and generating an estimated image by inputting the input image and the range information to a machine learning model.

## Description

### BACKGROUND

### Technical Field

The present disclosure relates to an image processing method using a machine learning model.

### Description of the Related Art

United States Patent Application Publication No. 2020/0389645 discusses a method for performing image recovery processing using a machine learning model as image processing using a machine learning model.

### SUMMARY

Image data is stored in various image formats such as Joint Photographic Experts Group (JPEG) and High Efficiency Image File Format (HEIF). The JPEG and HEIF formats have different ranges of representable values in an image.

According to a first aspect of the present invention, there is provided an image processing method as specified in claims 1 to 16. According to a second aspect of the present invention, there is provided an image processing apparatus as specified in claim 17. According to a third aspect of the present invention, there is provided an image processing system as specified in claim 18. According to a fourth aspect of the present invention, there is provided a program as specified in claims 19 and 21. According to a fifth aspect of the present invention, there is provided a training method as specified in claim 20.

Further features of the present invention will become apparent from the following description of exemplary embodiments with reference to the attached drawings.

### BRIEF DESCRIPTION OF THE DRAWINGS

Fig. 1 is a block diagram illustrating an image processing system according to a first exemplary embodiment.
Fig. 2 is an external view of the image processing system according to the first exemplary embodiment.
Fig. 3 is a diagram illustrating a flow of learning of a machine learning model according to the first exemplary embodiment.
Fig. 4 is a flowchart illustrating learning of the machine learning model according to the first exemplary embodiment.
Fig. 5 is a flowchart illustrating image processing using the machine learning model according to the first exemplary embodiment.
Fig. 6 is a block diagram illustrating an image processing system according to a second exemplary embodiment.
Fig. 7 is an external view of the image processing system according to the second exemplary embodiment.
Fig. 8 is a block diagram illustrating an image processing system according to a third exemplary embodiment.
Fig. 9 is a flowchart illustrating processing for generating an output image using a machine learning model according to the third exemplary embodiment.
Fig. 10 is a diagram illustrating an outline of the present invention.

### DESCRIPTION OF THE EMBODIMENTS

Exemplary embodiments of the present invention will be described in detail below with reference to the drawings. In the drawings, the same members are denoted by the same reference symbols, and redundant descriptions are omitted.

In the present exemplary embodiment, a method for performing image processing on images in various image formats using a machine learning model will be described.

The image processing according to the present exemplary embodiment uses, for example, a model constructed using a neural network as a machine learning model. A neural network uses filters to be convolved with an image, biases to be added to the image, and activation functions performing nonlinear transformation. The filters and the biases are called weights, and are generated by learning using training images and ground truth images.

The machine learning model according to the present exemplary embodiment is not limited to a model constructed using a neural network. It is sufficient that any mathematical model obtained by deep learning is used as the machine learning model according to the present exemplary embodiment. As the machine learning model according to the present exemplary embodiment, for example, a model constructed using a convolutional neural network (CNN) can be used. As the machine learning model, a model constructed using a generative adversarial network (GAN), a recurrent neural network (RNN), a fully connected network (FCN), or a transformer may be used. To avoid redundant expressions, a model constructed using a neural network may be hereinafter simply referred to as a neural network.

Image processing using a machine learning model generally includes processing in which the range of pixel values that can be taken in an input image is set to a default range and the input image is input to a machine learning model to generate an image to be processed, and processing in which the range of the image to be processed is set to the same range as the range of the input image, as needed. The former processing is referred to as normalization, and the latter processing is referred to as denormalization. A constant used in the processing is referred to as a normalization constant.

Specifically, in a case where the range of an input image is from "0" to "255" and the default range is from "0" to "1", a normalization constant "255" is used. In this case, normalization can be performed by dividing the pixel value of the input image by the normalization constant "255". In a case where the range of the input image is from "0" to "1023" and the default range is from "-1" to "1", a normalization constant "1023" is used. In this case, normalization can be performed by dividing the pixel value of the input image by the normalization constant "1023" (1023/2) and then subtracting "1" from the result. Denormalization is processing reverse to normalization using the same normalization constant as used in normalization.

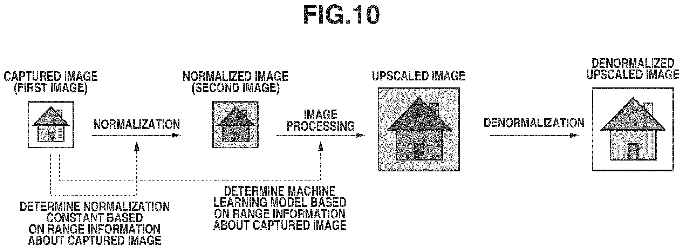

Next, image processing according to the present exemplary embodiment will be described with reference to Fig. 10. In the present exemplary embodiment, image processing is performed using range information. The range information according to the present exemplary embodiment includes information about an image format or information about an image capturing mode.

The image format according to the present exemplary embodiment corresponds to an encoding format in a case where a first image to be processed is stored in a storage medium or the like. Examples of the image format include Joint Photographic Experts Group (JPEG), Tagged Image File Format (TIFF), and High Efficiency Image File Format (HEIF). In JPEG and TIFF, the range of representable values is generally from "0" to "255" and the tone is an 8-bit value. In HEIF, the range of representable values is generally from "0" to "1023" and the tone is a 10-bit value.

The image capturing mode according to the present exemplary embodiment includes an image capturing mode (first image capturing mode information) regarding basic settings for image capturing in a normal image capturing mode (non-high dynamic range (HDR) image capturing) and a HDR image capturing mode. The HDR image capturing mode is an image capturing mode for reducing overexposure in a high-luminance portion. The image capturing mode may include not only the first image capturing mode information (first range information), but also second image capturing mode information (second range information) including more detailed information. In the present exemplary embodiment, the range used to represent an image may vary depending on the second image capturing mode information. The second image capturing mode will be described below.

An image format corresponding to an image capturing mode may be set depending on an imaging device used to obtain a first image. For example, images of a portrait, a landscape, a sport, and the like obtained in the normal image capturing mode may be stored in an image format such as JPEG or TIFF. In addition, images obtained in the HDR image capturing mode may be stored in an image format such as HEIF. Further, in the HDR image capturing mode, the degree of enlargement in the dynamic range of an image can be selected. In this case, the degree of enlargement in the dynamic range of an image corresponds to the second image capturing mode information described above.

The range of representable values in HEIF is generally from "0" to "1023", while the range of values used to represent an image may be, for example, from "0" to "600", "700", or "800" depending on the setting (second range information). In this case, the range of values used to represent the first image can be determined based on the second image capturing mode.

Fig. 10 illustrates an example where JPEG is set as the image format and a portrait mode (non-HDR image capturing) is set as the image capturing mode. In this case, the range of a captured image is from "0" to "255", and thus a normalization constant "255" can be used. A machine learning model learned using training images in a JPEG image format is selected and used.

The present exemplary embodiment is not limited to this example. For example, in a case where HEIF is set as the image format and the image capturing mode information indicates the HDR image capturing mode, the range of a captured image is from "0" to "1023", and thus a normalization constant "1023" can be used. A machine learning model learned using training images in a HEIF image format is preferably selected and used. HEIF images obtained in the HDR image capturing mode have a tone curve different from that of JPEG images obtained in the normal image capturing mode. Accordingly, HEIF images tend to have lower contrast. Such a difference in image quality may make it difficult to obtain a desired effect when the machine learning model learned using JPEG training images is applied to HEIF images.

On the other hand, a machine learning model learned using HEIF training images tends to have a higher correction effect (have a greater change due to correction) on an object with low contrast as compared with the machine learning model learned using JPEG training images.

Thus, in the present exemplary embodiment, processing to be executed is changed depending on range information about the image to be processed (first image), thereby making it possible to perform image processing using a machine learning model with higher precision.

Fig. 10 illustrates an example of upscaling (super-resolution) as image processing. Upscaling is image processing in which high frequency components that cannot be represented in a low-resolution image are estimated and a high-resolution image is generated. The image processing is not limited to this example. Blur correction, contrast enhancement, brightness improvement, denoising, defocus blur conversion, lighting conversion, and the like may also be performed.

While the exemplary embodiment described above illustrates a case where processing is performed on images in image formats such as JPEG and HEIF, the exemplary embodiment is also applicable to moving images. Moving images also have an image capturing mode in which each image is stored as 8-bit data during normal image capturing, and an image capturing mode in which each image is saved (stored) as 10-bit data, such as a HDR image capturing mode in which image capturing can be performed with a wide dynamic range, or a log image capturing mode. Accordingly, the machine learning model and the normalization contrast are changed depending on range information about a moving image, thereby making it possible to perform image processing using a machine learning model on each frame of the moving image with higher precision.

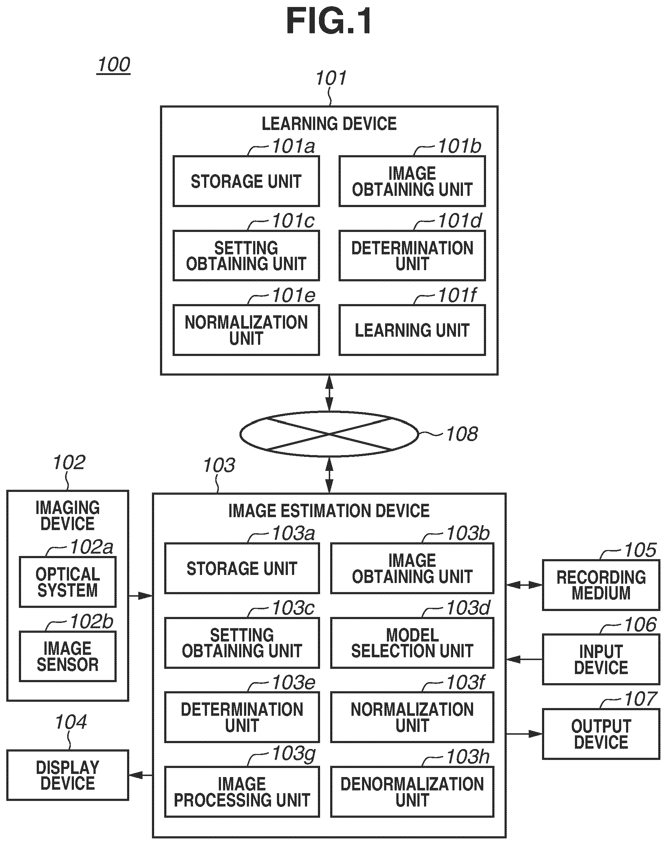

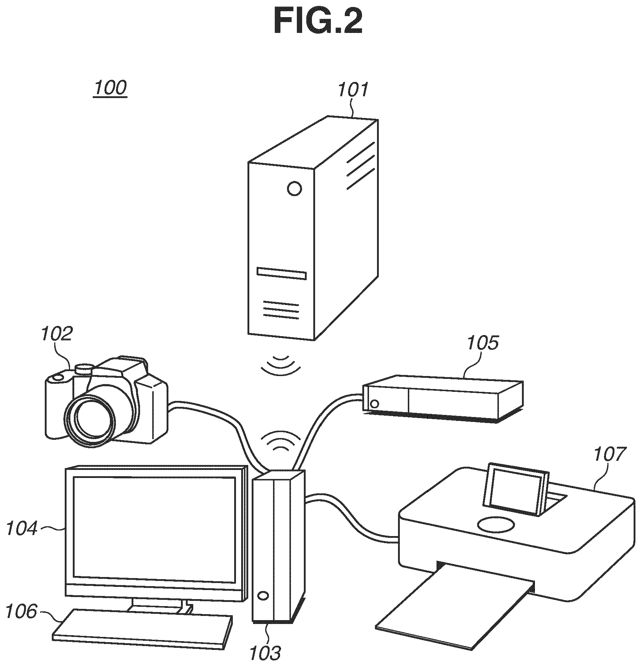

An image processing system 100 according to a first exemplary embodiment of the present invention will now be described with reference to Figs. 1 and 2. In the first exemplary embodiment, a low-resolution JPEG image is upscaled using a machine learning model, to thereby perform image processing for generating a high-resolution image with higher precision.

Fig. 1 is a block diagram illustrating the image processing system 100 according to the first exemplary embodiment. Fig. 2 is an external view of the image processing system 100. The image processing system 100 includes a learning device 101, an imaging device 102, an image estimation device 103, a display device 104, a recording medium 105, an input device 106, an output device 107, and a network 108.

The learning device 101 includes a storage unit 101a, an image obtaining unit 101b, a setting obtaining unit 101c, a determination unit 101d, a normalization unit 101e, and a learning unit 101f.

The imaging device 102 includes an optical system 102a and an image sensor 102b. The optical system 102a collects light incident on the imaging device 102 from an object space. The image sensor 102b receives an optical image of an object formed via the optical system 102a and obtains a captured image (low-resolution color image). The image sensor 102b is a charge-coupled device (CCD) sensor, a complementary metal-oxide semiconductor (CMOS) sensor, or the like.

Information (image capturing mode information, the pixel pitch of the image sensor 102b, the type of an optical low-pass filter, International Standardization for Organization (ISO) sensitivity, etc.) about image capturing conditions for the captured image can be obtained together with the image. Development conditions (image format, noise removal strength, sharpness strength, image compression ratio, etc.) for the captured image can also be obtained together with the image. These pieces of information obtained together with the image can be transmitted to an image obtaining unit 103b in the image estimation device 103 to be described below together with the image. A storage unit for storing the obtained image, a display unit for displaying the obtained image, a transmission unit for transmitting the image to an external device, an output unit for storing the image in an external storage medium, and the like are not illustrated. Also, a control unit for controlling each unit of the imaging device 102 is not illustrated.

The image estimation device 103 includes a storage unit 103a, the image obtaining unit 103b, a setting obtaining unit 103c, a model selection unit 103d, a determination unit 103e, a normalization unit 103f, an image processing unit (estimation unit) 103g, and a denormalization unit 103h. In the image estimation device 103, the setting obtaining unit 103c obtains information (range information) indicating an image format or an image capturing mode from the low-resolution JPEG image (captured image) obtained by the image obtaining unit 103b.

The model selection unit 103d selects a machine learning model based on the image format or the corresponding image capturing mode information. The determination unit 103e determines a normalization constant based on the image format or the corresponding image capturing mode information.

The normalization unit 103f generates an image (input image) by normalizing the pixel value of the captured image using the normalization constant. The image processing unit 103g generates a high-resolution image (estimated image) by upscaling the normalized image using the machine learning model.

The denormalization unit 103h generates an image (output image) by denormalizing the pixel value of the high-resolution image using the normalization constant. The image processing unit 103g may perform upscaling using information (image information) about image capturing conditions and development conditions obtained by the image obtaining unit 103b.

The low-resolution JPEG image (captured image) according to the present exemplary embodiment may be an image captured by the imaging device 102, or may be an image stored in the recording medium 105.

In the image processing according to the present exemplary embodiment, a neural network is used as a machine learning model. Information about the weight of the neural network is read out from the storage unit 103a. The weight is obtained through learning by the learning device 101. The image estimation device 103 preliminarily reads out weight information from the storage unit 101a via the network 108, and stores the weight information in the storage unit 103a. The weight information may be stored as the weight value itself, or may be stored in an encoded form. The numerical precision for representing the weight is quantized, and the operational precision for image processing using the weight is determined based on the numerical precision. Learning of the machine learning model, quantization of the weight, and image processing using the weight will be described in detail below.

The output image is output to at least one of the display device 104, the recording medium 105, and the output device 107. Examples of the display device 104 include a liquid crystal display and a projector. A user can check the image that is being processed through the display device 104, and can perform an image editing operation or the like through the input device 106. The recording medium 105 is, for example, a semiconductor memory, a hard disk, or a server on the network 108. The input device 106 is, for example, a keyboard or a mouse. The output device 107 is, for example, a printer.

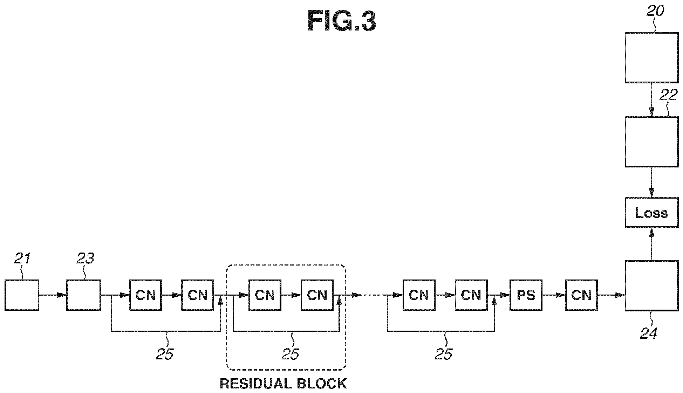

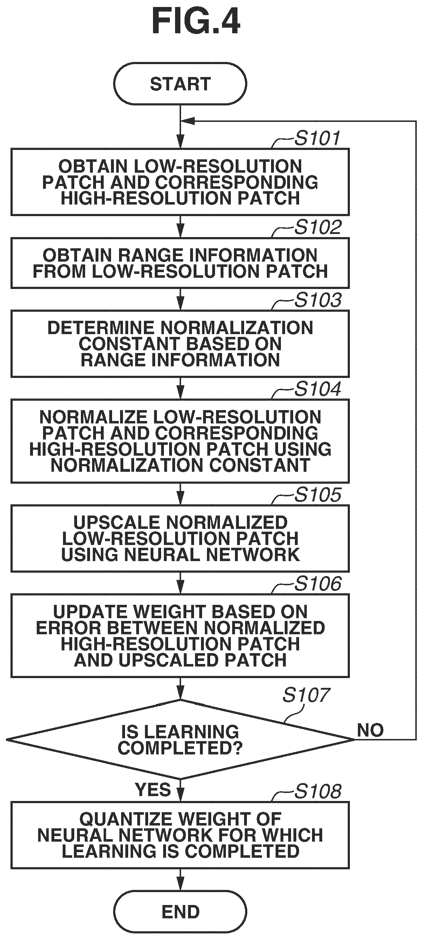

Next, a method for weight learning processing to be executed by the learning device 101 according to the present exemplary embodiment will be described with reference to Figs. 3 and 4. Fig. 3 is a diagram illustrating a flow of updating the weight of a neural network (learning of a machine learning model). Fig. 4 is a flowchart illustrating processing for updating the weight of the neural network. Each step illustrated in Fig. 4 is mainly executed by the image obtaining unit 101b, the setting obtaining unit 101c, the determination unit 101d, the normalization unit 101e, and the learning unit 101f.

First, in step S101, the image obtaining unit 101b obtains a low-resolution patch (first training image) 21 as a training image and a corresponding high-resolution patch (first ground truth image) 20. In the present exemplary embodiment, the term "patch" refers to an image including a default number of pixels. For example, the low-resolution patch includes 128 × 128 (length × width) pixels, and the corresponding high-resolution patch includes 256 × 256 pixels. In this case, a magnification ratio of a patch in each of longitudinal and traverse directions is 200%, and thus a magnification ratio for upscaling is 200% (the number of pixels is quadrupled).

The magnification ratio for upscaling is not limited to 200% and can be any magnification ratio as long as the low-resolution patch and the corresponding high-resolution patch can be obtained. The low-resolution patch and the corresponding high-resolution patch may be obtained by capturing images of an object using optical systems having different focal lengths and cutting out corresponding portions in two images to be obtained.

While the present exemplary embodiment illustrates an example where the low-resolution patch and the corresponding high-resolution path are generated by numerical calculations, the present invention is not limited to this example. The corresponding low-resolution patch may be generated by downsampling the high-resolution patch. Alternatively, the corresponding low-resolution patch obtained by the imaging device 102 and the corresponding high-resolution patch in which effects (aberration, diffraction) of the optical system 102a are reduced may be generated by numerical calculations. Further, in the present exemplary embodiment, the image format of each of the low-resolution patch and the corresponding high-resolution patch is JPEG. Alternatively, the image format of the low-resolution patch may be JPEG and the image format of the corresponding high-resolution patch may be TIFF. While the present exemplary embodiment illustrates an example where the image capturing mode information about the low-resolution patch indicates the portrait mode, the present invention is not limited to this example.

In step S102, the setting obtaining unit 101c obtains range information (image format and image capturing mode information) from the first training image 21.

In step S103, the determination unit 101d determines a normalization constant based on the image capturing mode information. In the present exemplary embodiment, the image capturing mode information (first imaging mode) is information that indicates the portrait mode and indicates that HDR image capturing is not performed. Accordingly, a normalization constant "255" is used. The normalization constant may be determined based on the image format. In this case, the normalization constant "255" may be used because the image format is JPEG.

In step S104, the normalization unit 101e normalizes the range of values in the first training image 21 and the corresponding first ground truth image 20 to the default range using the normalization constant.

In the present exemplary embodiment, the range of each of the low-resolution patch and the high-resolution patch is from "0" to "255" and the default range is from "0" to "1".

In step S105, the learning unit 101f generates a high-resolution patch (third training image) 24 by upscaling a normalized low-resolution patch (second training image) 23 using a neural network. The third training image 24 and a high-resolution patch (second ground truth image) 22 obtained by normalizing the first ground truth image ideally match each other.

The upscaling processing in which image information is taken into consideration may be performed by inputting the image information together with the second training image 23 to the neural network. For example, ISO sensitivity may be used as information about image capturing conditions to perform upscaling so as to prevent noise from being excessively emphasized when the ISO sensitivity is high.

Use of an image format as information about development conditions makes it possible to perform upscaling processing in which the image format is taken into consideration. In this case, a machine learning model can be learned using training images in various image formats.

With this configuration, the use of the machine learning model obtained by learning makes it possible to execute upscaling depending on the image format by inputting captured images in various image formats and the image formats of the captured images. This processing is preferable in that image processing can be performed with higher precision without the need for selecting a machine learning model depending on range information (image format) from among a plurality of machine learning models.

Examples of a method for inputting image information to a neural network include a method of generating an image (map) including pixel values for image information on the entire image, concatenating training images during learning and concatenating captured images during estimation in a channel direction, and inputting the image information. Specifically, if the image format is JPEG, an image having pixel values "0" on the entire image may be used, and if the image format is HEIF, an image having pixel values "1" on the entire image may be used. An image having as pixel values the corresponding image capturing mode information instead of the image format as information about development conditions may be used.

In step S106, the learning unit 101f updates the weight of the machine learning model based on an error between the second ground truth image 22 and the third training image 24 corresponding to the second ground truth image 22. In this case, the weight includes components of filters in each layer and biases. While the present exemplary embodiment illustrates an example where backpropagation is used to update the weight, the present invention is not limited to this example. In mini-batch learning, an error between a plurality of normalized high-resolution patches 22 and third training images 24 corresponding to the high-resolution patches 22 is obtained, and the weight is updated. As a loss function, for example, L2 norm or L1 norm may be used. The weight updating method (learning method) is not limited to mini-batch learning, but instead may be batch learning or on-line learning.

In step S107, the learning unit 101f determines whether learning of the weight is completed. The determination as to whether learning is completed may be made based on, for example, whether the iteration count of updating the weight has reached a prescribed value, or whether the variation of the weight during updating is smaller than a prescribed value. If it is determined that learning is not completed yet (NO in step S107), the processing returns to step S101 to obtain a plurality of new first training images 21 and a plurality of corresponding first ground truth images 20. On the other hand, if it is determined that learning is completed (YES in step S107), the processing proceeds to step S108.

In step S108, the learning unit 101f quantizes the weight after learning is completed. In the present exemplary embodiment, the JPEG format in which the tone in the image format of each training image is an 8-bit value (range from "0" to "255") is used, the numerical precision for representing the weight is quantized to 8-bit. However, the present invention is not limited to this example.

In general, if the numerical precision (tone) for representing the weight of a neural network is lower than the tone for representing the pixel value of an input image, the precision of processing using the neural network deteriorates. Accordingly, for example, in the HEIF in which the tone in the image format of an input image is a 10-bit value, it may be preferable to perform processing using a neural network based on the weight quantified to 10-bit or more.

This step may be skipped if learning can be performed by setting the numerical precision for representing the weight to 8-bit and setting the operational precision for learning to 8-bit in each of steps S105 and S106. It may also be preferable to use a neural network quantized with numerical precision more than or equal to the number of bits of an image format with a higher tone if the neural network is learned using training images in various image formats. The quantized weight information is stored in the storage unit 101a.

While the present exemplary embodiment illustrates an example where learning of a neural network for generating a high-resolution image by upscaling a low-resolution image is used, the present invention is not limited to this example. Neural networks for various tasks may be learned and used. For example, in the case of generating an image by removing noise from a captured image, a patch including noise as a training image and the corresponding patch in which noise is reduced are obtained, and a neural network is learned based on the patches, for subsequent use.

Examples of other tasks include blur correction, contrast enhancement, brightness improvement, denoising, defocus blur conversion, and lighting conversion. The use of training images depending on the task makes it possible to learn a neural network with which other tasks can be executed in the method described above.

In Fig. 3, "CN" indicates a convolutional layer. In each convolutional layer CN, a convolution of an input and a filter, and the sum with a bias are calculated, and the result is subjected to non-linear transform using an activating function.

Initial values for components of filters and biases may be arbitrarily determined. In the present exemplary embodiment, the initial values are determined using random numbers. As the activating function, for example, a Rectified Linear Unit (ReLU) or sigmoid function can be used. A multidimensional array output in each of the layers excluding a final layer is a feature map.

The feature map is a four-dimensional array and includes a batch dimension, longitudinal and transverse dimensions, and a channel dimension. In a skip connection 25, feature maps output from layers that are not continuously formed are combined. In this case, the sum for each element may be calculated to combine the feature maps, or concatenation may be performed in a channel direction.

An element (block or module) in each frame illustrated in Fig. 3 represents a residual block. A network obtained by forming residual blocks in multiple layers is referred to as a residual network and is widely used in image processing by deep learning (DL).

While the present exemplary embodiment illustrates an example where the configuration of the neural network illustrated in Fig. 3 is used, the present invention is not limited to this example. For example, an inception module in which convolution layers having different convolution filter sizes are arranged side by side and a plurality of obtained feature maps is integrated into a final feature map may be used. Further, other elements such as dense blocks having a dense skip connection structure may be formed in multiple layers to configure a network.

A processing load (convolution operation) may be reduced by reducing the size of the feature map in a layer close to the input, enlarging the feature map in a layer close to the output, and reducing the size of the feature map in an intermediate layer. To reduce the size of the feature map, pooling, stride, or the like can be used. To enlarge the feature map, deconvolution (or transposed convolution), pixel shuffle, interpolation, or the like can be used.

A low-resolution feature map is enlarged in a layer close to the output, to thereby obtain a high-resolution feature map. While the present exemplary embodiment illustrates an example where pixel shuffle ("PS" in Fig. 3) is used as a method for upsampling the feature map, the present invention is not limited to this example.

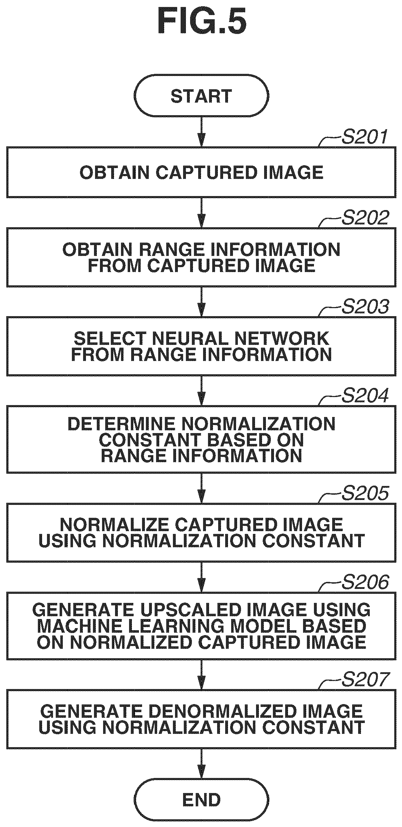

Next, processing in which an upscaled image is generated based on a captured image by the image estimation device 103 according to the present exemplary embodiment will be described with reference to Fig. 5. Fig. 5 is a flowchart illustrating processing for generating an upscaled image. Each step illustrated in Fig. 5 is mainly executed by the image obtaining unit 103b, the setting obtaining unit 103c, the model selection unit 103d, the determination unit 103e, the normalization unit 103f, the image processing unit (estimation unit) 103g, and the denormalization unit 103h in the image estimation device 103.

First, in step S201, the image obtaining unit 103b obtains a captured image (first image). The captured image is a low-resolution JPEG image similar to that used during learning. While the present exemplary embodiment illustrates an example where the captured image is transmitted from the imaging device 102, the present invention is not limited to this example. Image information may also be obtained together with the captured image and the image information may be used in the subsequent steps.

In step S202, the setting obtaining unit 103c obtains an image format or image capturing mode information (range information) from the captured image. In the present exemplary embodiment, the image format is JPEG and the image capturing mode information indicates the portrait mode.

In step S203, the model selection unit 103d selects a neural network (machine learning model) used to generate an upscaled image based on the range information about the captured image.

Since the image format of the captured image is JPEG in the present exemplary embodiment, a neural network learned using JPEG training images in the learning method illustrated in Fig. 3 is selected. Alternatively, a neural network may be selected from the image capturing mode information (first range information) corresponding to the image format. Information about the weight of the selected neural network is transmitted from the learning device 101 and is stored in the storage unit 103a. The numerical precision for representing the weight of the neural network is quantized to 8-bit.

In step S204, the determination unit 103e determines a normalization constant based on the range information about the captured image. The range information according to the present exemplary embodiment is information indicating the portrait mode as the image capturing mode of the captured image. In the present exemplary embodiment, if the range information indicates the portrait mode, the determination unit 103e determines the normalization constant "255". Alternatively, the normalization constant may be determined using an image format as range information. Also, in this case, the determination unit 103e may determine the normalization constant "255" because the image format of the captured image is JPEG.

In step S205, the normalization unit 103f normalizes the range of the captured image to the default range using the normalization constant. In the present exemplary embodiment, the range of the captured image is from "0" to "255", the default range is from "0" to "1", and the normalization constant is "255". Accordingly, normalization is performed by dividing the pixel value of the captured image by the normalization constant. Instead of using the image format or image capturing mode information, a predetermined value or a value specified from the user may be used as range information, and the normalization constant may be determined based on the range information.

In step S206, the image processing unit 103g generates the upscaled image using the machine learning model based on the normalized captured image. The numerical calculation precision for upscaling using the machine learning model is 8-bit.

In step S207, the denormalization unit 103h generates an image (output image) by denormalizing the range of the upscaled image to the range of the original captured image using the normalization constant. In the present exemplary embodiment, the range of the upscaled image is from "0" to "1", the range of the original captured image is from "0" to "255", and the normalization constant is "255". Accordingly, denormalization is performed by multiplying the pixel value of the upscaled image by the normalization constant.

While the present exemplary embodiment illustrates an example illustrates an example where upscaling is performed on the image captured in the image capturing mode other than the HDR image capturing mode in the JPEG format, the present invention is not limited to this example. In step S203, the model selection unit 103d can select a neural network learned using HEIF training images depending on the range information about the image to be processed. In this case, it may be preferable to perform quantization processing such that numerical precision to represent the weight of the neural network is more than or equal to 10-bit. In step S204, the determination unit 103e determines the normalization constant "1023" based on the image format (HEIF) or the image capturing mode information (HDR image capturing).

In this case, in step S205, the range of values in the captured image is normalized to the default range using the normalization constant. In step S206, the image upscaled using the machine learning model is generated based on the normalized captured image. In step S207, the image (output image) is generated by denormalizing the range of the upscaled image to the range of the original captured image using the normalization constant.

If the machine learning model is learned using training images including images in various image formats, the upscaled image can be generated by inputting the normalized captured image and the range information to the machine learning model.

While the present exemplary embodiment illustrates an example where the learning device 101 and the image estimation device 103 are separately provided, the present invention is not limited to this example. The learning device 101 and the image estimation device 103 may be integrally formed. In other words, a learning step (processing illustrated in Fig. 4) and an estimation step (processing illustrated in Fig. 5) may be performed within the integrated device.

With the configuration described above, according to the present exemplary embodiment, a high-resolution image can be generated with higher precision by upscaling a low-resolution image using a neural network.

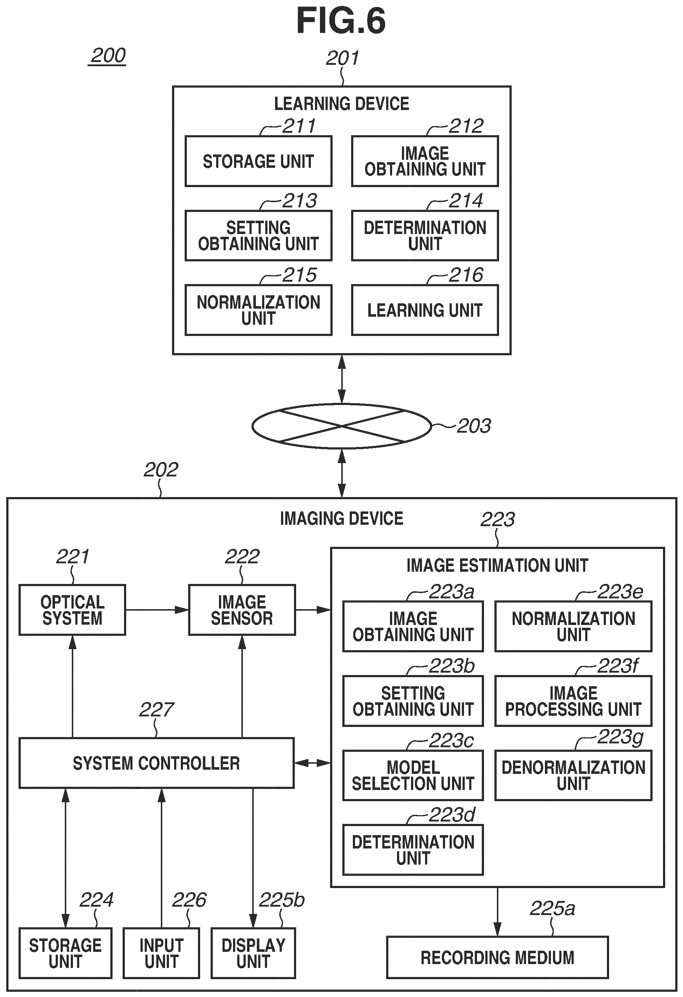

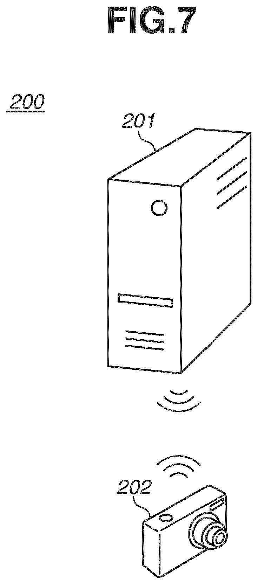

Next, an image processing system 200 according to a second exemplary embodiment of the present invention will be described with reference to Figs. 6 and 7. Fig. 6 is a block diagram illustrating the image processing system 200 according to the second exemplary embodiment.

Fig. 7 is an external view of the image processing system 200. The image processing system 200 according to the second exemplary embodiment differs from the image processing system 100 according to the first exemplary embodiment in that an imaging device obtains a captured image (blurred HEIF image) and performs image processing.

The image processing system 200 includes a learning device 201 and an imaging device 202 that are connected via a network 203. The learning device 201 corresponds to a first device and the imaging device 202 corresponds to a second device. There is no need for the learning device 201 and the imaging device 202 to be constantly connected via the network 203.

The learning device 201 learns a machine learning model for use in image processing to generate an image by removing blur from the captured image. The learning device 201 includes a storage unit 211, an image obtaining unit (obtaining unit) 212, a setting obtaining unit (setting unit) 213, a determination unit 214, a normalization unit 215, and a learning unit 216.

The imaging device 202 obtains a captured image (blurred HEIF image) by capturing an image of an object space, and generates a blur reduced image from the captured image. Image processing to be executed by the imaging device 202 will be described in detail below. The imaging device 202 includes an optical system 221 and an image sensor 222. An image estimation unit 223 includes an image obtaining unit 223a, a setting obtaining unit 223b, a model selection unit 223c, a determination unit 223d, a normalization unit 223e, an image processing unit (estimation unit) 223f, and a denormalization unit 223g.

Neural network learning processing to be executed by the learning device 201 is different from that of the first exemplary embodiment in that a blurred patch in the HEIF format as a training image and the corresponding sharp patch with less blur are obtained.

Information about the weight of the neural network is generated through learning by the learning device 201, and the information is stored in the storage unit 211. The imaging device 202 reads out weight information from the storage unit 211 via the network 203 and stores the weight information in a storage unit 224.

In the image estimation unit 223, the blur reduced image (output image) is mainly generated by the image processing unit 223f using information about the weight of the learned neural network stored in the storage unit 224, the blurred image (captured image) obtained by the obtaining unit 223a, and image information about the image. The generated blur reduced image is stored in a recording medium 225a. If an instruction to display the blur reduced image is issued from the user, the stored image is read out and displayed on a display unit 225b.

The captured image stored in the recording medium 225a and image information about the captured image may be read out so that the image estimation unit 223 can generate the blur reduced image. A series of control operations described above is performed by a system controller 227.

Next, blur reduced image generation processing to be executed by the image estimation unit 223 according to the present exemplary embodiment will be described.

First, in step S201, the image obtaining unit 223a obtains a captured image (first image). In the present exemplary embodiment, the captured image is a blurred HEIF image similar to that used during learning. The captured image according to the present exemplary embodiment is obtained by the imaging device 202 and is stored in the storage unit 224. However, the captured image is not limited to this example. Further, image information may be obtained together with the captured image and the image information may also be used in the subsequent steps.

In step S202, the setting obtaining unit 223b obtains range information from the captured image. Hereinafter, HEIF is used as the image format in the present exemplary embodiment. The present exemplary embodiment illustrates an example where the first image capturing mode information (first range information) indicating HDR image capturing and the second image capturing mode information (second range information) indicating "dynamic range + 1" are obtained. Hereinafter, "dynamic range + 1" is simply expressed as "D + 1".

In step S203, the model selection unit 223c selects a neural network used to generate a blur reduced image based on the image format of the captured image. Since the image format of the captured image is HEIF in the present exemplary embodiment, a neural network learned using HEIF training images (a blurred patch and the corresponding sharp patch with less blur) is selected. Alternatively, a neural network may be selected from the image capturing mode information corresponding to the image format. The information about the weight of the neural network is transmitted from the learning device 201 and is stored in the storage unit 224. Further, the numerical precision for representing the weight of the neural network is quantized to 16-bit.

In step S204, the determination unit 223d determines a normalization constant based on the image capturing mode information about the captured image. The image capturing mode information about the captured image according to the present exemplary embodiment indicates "D + 1" for HDR image capturing. "D + 1" indicates the second image capturing mode information (second range information) indicating the degree of enlargement in the dynamic range during HDR image capturing. Accordingly, the normalization constant can be determined depending on the range that is determined by "D + 1" and is used to represent the captured image. For example, in "D + 1", which is one of the degrees of enlargement in the dynamic range for HDR image capturing, the range used to represent the captured image is from "0" to "600", and thus a normalization constant "600" is determined. In the case of "D + 2", in which image capturing can be performed with a wider dynamic range than in "D + 1", the range used to represent the captured image is from "0" to "700", and thus a normalization constant "700" may be determined. If image capturing mode information is not available, a predetermined value or a value specified from the user may be set as range information and the value may be used as the normalization constant.

In step S205, the normalization unit 223e performs normalization using the normalization constant, thereby setting the range of the captured image to the default range. In the present exemplary embodiment, the range of the captured image is from "0" to "600", and the normalization constant is "600". Further, since the default range is from "-1" to "1", normalization can be performed by dividing the pixel value of the captured image by "300" and then subtracting "1" from the result.

In step S206, the image processing unit 223f generates the image in which blur is removed by inputting the normalized captured image to the machine learning model. The numerical calculation precision for removing blur using the machine learning model is 16-bit.

In step S207, the denormalization unit 223g generates an image (output image) by denormalizing the range of the image to the range of the original captured image using the normalization constant. In the present exemplary embodiment, the default range of the blur reduced image is from "-1" to "1", the range of the original captured image is from "0" to "600", and the normalization constant is "600". Accordingly, denormalization can be performed by adding "1" to the pixel value of the blur reduced image and then multiplying the result by "200".

The present exemplary embodiment described above illustrates an example where blur is removed from a HEIF image captured in the image capturing mode corresponding to HDR image capturing. In the case of removing blur from a JPEG image captured in the image capturing mode other than HDR image capturing mode, it may be preferable to select a neural network learned using JPEG training images, like in the first exemplary embodiment.

With the configuration described above, the image in which blur is reduced can be generated with higher precision from a blurred image using a neural network.

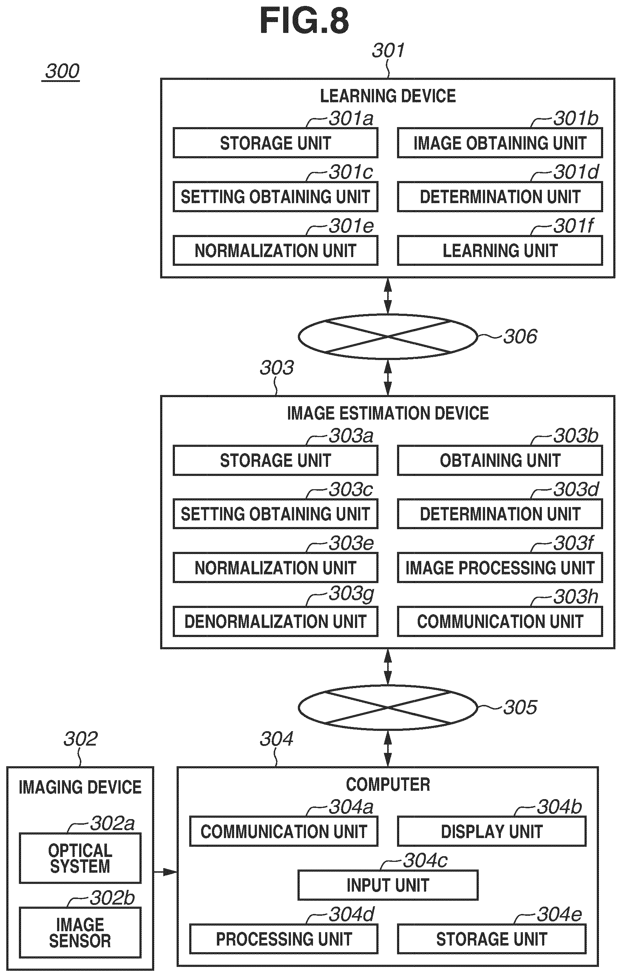

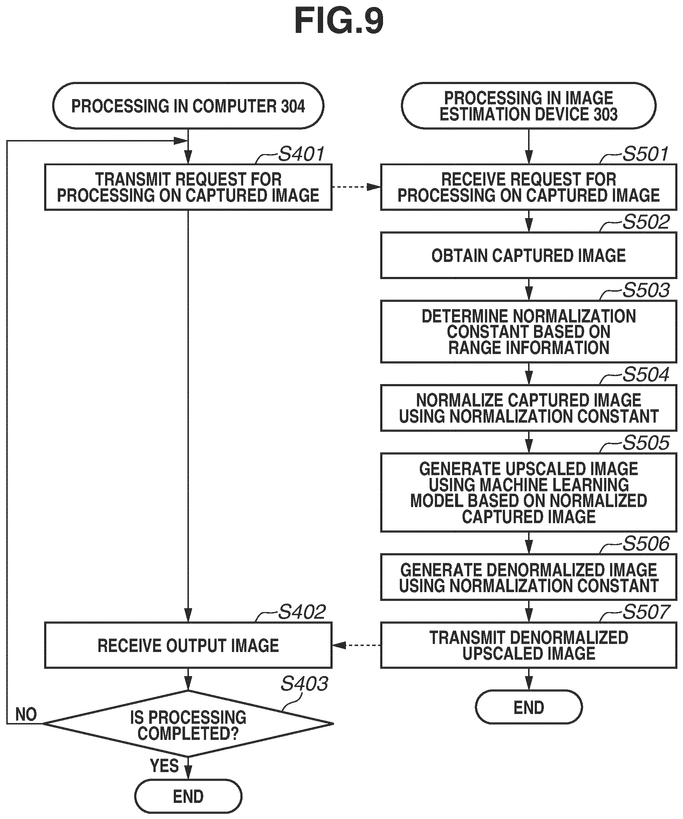

Next, an image processing system 300 according to a third exemplary embodiment of the present invention will be described with reference to Figs. 8 and 9. Fig. 8 is a block diagram illustrating the image processing system 300 according to the third exemplary embodiment. Fig. 9 is a flowchart illustrating processing for generating an estimated image using a machine learning model.

The image processing system 300 according to the third exemplary embodiment differs from the image processing systems 100 and 200 according to the first and second exemplary embodiments, respectively, in that the image processing system 300 includes a processing device that transmits a captured image (low-resolution image) to be subjected to image processing to an image estimation device and receives an estimated image or an output image from the image estimation device.

The image processing system 300 includes a learning device 301, an imaging device 302, an image estimation device 303, and a processing device (computer) 304. The learning device 301 and the image estimation device 303 are, for example, servers. The computer 304 is, for example, a user terminal (e.g., a personal computer or a smartphone). The computer 304 is connected to the image estimation device 303 via a network 305. The image estimation device 303 is connected to the learning device 301 via a network 306. The computer 304 and the image estimation device 303 are configured to communicate with each other, and the image estimation device 303 and the learning device 301 are configured to communicate with each other.

Neural network learning processing to be executed by the learning device 301 differs from that of the first exemplary embodiment in that training images in HEIF and JPEG image formats are obtained in the case of obtaining a low-resolution patch and the corresponding high-resolution patch as training images. In the third exemplary embodiment, like in step S105, learning is performed by inputting range information (image format or corresponding image capturing mode information) together with the training images to the neural network.

The configuration of the imaging device 302 is similar to the configuration of the imaging device 102 according to the first exemplary embodiment, and thus description thereof is omitted.

The image estimation device 303 includes a storage unit 303a, an obtaining unit 303b, a setting obtaining unit 303c, a determination unit 303d, a normalization unit 303e, an image processing unit 303f, a denormalization unit 303g, and a communication unit 303h. The communication unit 303h has a function of receiving a request transmitted from the computer 304, and a function of transmitting an output image generated in the image estimation device 303 to the computer 304.

The computer 304 includes a communication unit (transmission unit) 304a, a display unit 304b, an input unit 304c, a processing unit 304d, and a storage unit 304e. The communication unit 304a has a function of transmitting to the image estimation device 303 a request to cause the image estimation device 303 to execute processing on the captured image (low-resolution HEIF image), and a function of receiving the output image processed by the image estimation device 303.

The display unit 304b includes a function of displaying various kinds of information. Examples of the information displayed by the display unit 304b include the captured image to be transmitted to the image estimation device 303, and the output image received from the image estimation device 303.

An image processing start instruction and the like from the user are input to the input unit 304c. The processing unit 304d has a function of performing image processing, including noise removal and sharpness, on the output image received from the image estimation device 303. The storage unit 304e stores the captured image obtained from the imaging device 302, the output image received from the image estimation device 303, and the like.

Next, image processing according to the present exemplary embodiment will be described.

The image processing illustrated in Fig. 9 is started when an instruction to start image processing is issued by the user via the computer 304. First, an operation to be performed by the computer 304 will be described.

In step S401, the computer 304 transmits a request for processing on the captured image to the image estimation device 303. Any method can be used to transmit the captured image to be processed to the image estimation device 303. For example, the captured image may be uploaded to the image estimation device 303 in step S401, or may be uploaded to the image estimation device 303 before step S401. The captured image may be an image stored in a server different from the image estimation device 303. In step S401, the computer 304 may transmit an identification (ID) for authenticating the user, image information, and the like together with the request for processing on the captured image.

In step S402, the computer 304 receives the output image generated in the image estimation device 303.

Next, an operation to be performed by the image estimation device 303 will be described.

In step S501, the image estimation device 303 receives a request for processing on the captured image transmitted from the computer 304. The image estimation device 303 determines that the instruction to perform processing on the captured image is issued, and executes processing in step S502 and subsequent steps.

In step S502, the obtaining unit 303b obtains the captured image. In the present exemplary embodiment, the captured image is an image transmitted from the computer 304. Image information may also be obtained together with the captured image and the image information may be used in the following steps. Further, the obtaining unit 303b obtains information about the weight of the neural network (machine learning model) used to generate an upscaled image. The weight information is transmitted from the learning device 301 and is stored in the storage unit 303a. The numerical precision for representing the weight of the neural network is quantized to 16-bit.

In step S503, the determination unit 303d determines a normalization constant based on the range information about the captured image.

The processes of steps S504 to S506 are respectively similar to steps S205 to S207 according to the first exemplary embodiment.

In step S507, the image estimation device 303 transmits the output image (high-resolution upscaled image) to the computer 304.

With the configuration described above, according to the present exemplary embodiment, it is possible to generate an upscaled image with higher precision from a low-resolution image using a neural network.

### (Other Exemplary Embodiments)

The present invention can also be implemented by processing in which a program for implementing one or more functions of the exemplary embodiments described above is supplied to a system or an apparatus via a network or a storage medium, and one or more processors in a computer of the system or the apparatus read out and execute the program. The present invention can also be implemented by a circuit (e.g., application-specific integrated circuit (ASIC)) for implementing one or more functions of the exemplary embodiments.

According to the exemplary embodiments, it is possible to provide an image processing method and an image processing apparatus for performing image processing on images in various image capturing mode information and various image formats with higher precision using a machine learning model, and also provide a program and a storage medium. It is sufficient that the image processing apparatus is an apparatus having an image processing function according to the present invention, and the image processing apparatus can be implemented in the form of an imaging device or a personal computer.

Exemplary embodiments of the present invention have been described above. The present invention is not limited to the exemplary embodiments and can be modified and altered in various ways within the scope of the present invention.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all equivalent structures and functions.

## Claims

1. An image processing method, comprising:
obtaining an input image and range information about pixel values of the input image;
selecting at least one machine learning model from among a plurality of machine learning models based on the range information; and
generating an estimated image based on the input image and the selected machine learning model.

2. The image processing method according to claim 1, wherein the input image is generated by normalizing a first image.

3. The image processing method according to claim 1 or 2, wherein the range information is information about a dynamic range.

4. The image processing method according to claim 2 or 3,
wherein the first image is an image stored in a storage medium, and
wherein the range information includes image format information.

5. The image processing method according to claim 2 or 3,
wherein the first image is an image obtained by an imaging device, and
wherein the range information includes imaging mode information about the imaging device.

6. The image processing method according to any one of claims 1 to 5, further comprising generating an output image by denormalizing the estimated image.

7. The image processing method according to any one of claims 2 to 6, wherein in the generation of the input image, a normalization constant is determined based on the range information and the first image is normalized based on the normalization constant.

8. The image processing method according to claim 7,
wherein the range information includes first range information and second range information, and
wherein in the selection of the machine learning model, the machine learning model is selected based on the second range information.

9. The image processing method according to claim 8, wherein the first range information is image format information indicating High Efficiency Image File Format (HEIF).

10. The image processing method according to claim 8, wherein the first range information is image capturing mode information indicating whether to perform high dynamic range (HDR) image capturing.

11. The image processing method according to claim 8, wherein the second range information is information indicating a dynamic range.

12. The image processing method according to claim 11, wherein the normalization constant increases as the dynamic range increases.

13. The image processing method according to any one of claims 8 to 12, wherein in a case where first range information is image format information indicating Joint Photographic Experts Group (JPEG), the machine learning model is a first machine learning model, and in a case where the first range information is image format information indicating HEIF, the machine learning model is a second machine learning model.

14. The image processing method according to claim 13, wherein the first machine learning model is a machine learning model trained using a JPEG image as training data, and the second machine learning model is a machine learning model trained using a HEIF image as training data.

15. The image processing method according to any one of claims 1 to 14, wherein in the generation of the estimated image, the machine learning model upscales an input image.

16. The image processing method according to any one of claims 1 to 15, wherein in the generation of the estimated image, the machine learning model reduces blur in an input image.

17. An image processing apparatus, comprising:
means for obtaining an input image and range information about pixel values of the input image;
means for selecting at least one machine learning model from among a plurality of machine learning models based on the range information; and
means for generating an estimated image based on the input image and the selected machine learning model.

18. An image processing system, comprising:
an image processing apparatus according to claim 17; and
a control device configured to communicate with the image processing apparatus,
wherein the control device includes transmission means for transmitting a request to cause the image processing apparatus to execute processing on the input image, and
wherein the image processing apparatus includes reception means for receiving the request, and executes processing on the input image in response to the request.

19. A program for causing a computer to execute an image processing method according to any one of claims 1 to 16.

20. A training method, comprising:
obtaining a first training image and a first ground truth image;
generating a second training image by normalizing the first training image based on range information about the first training image;
generating a second ground truth image by normalizing the first ground truth image based on range information about the first ground truth image;
generating a third training image based on the second training image using a machine learning model; and
training the machine learning model based on an error between the third training image and the second ground truth image.

21. A program for causing a computer to execute a training method according to claim 20.
